Europäisches Patentamt

European Patent Office

Office européen des brevets

(11) Numéro de publication: **0 151 363**

**A1**

(12) # DEMANDE DE BREVET EUROPEEN

(21) Numéro de dépôt: **84402680.7**

(22) Date de dépôt: **20.12.84**

(51) Int. Cl.⁴: **B 29 D 11/00**
**D 01 F 8/04, G 02 B 6/04**

(30) Priorité: **29.12.83 FR 8321145**

(43) Date de publication de la demande:
**14.08.85 Bulletin 85/33**

(84) Etats contractants désignés:
**BE CH DE GB IT LI NL**

(71) Demandeur: **Bosc, Dominique**
**26, Résidence du Roux**
**F-22300 Lannion(FR)**

(72) Inventeur: **Bosc, Dominique**
**26, Résidence du Roux**
**F-22300 Lannion(FR)**

(74) Mandataire: **Warcoin, Jacques et al,**
**Cabinet Régimbeau 26, avenue Kléber**
**F-75116 Paris(FR)**

(54) **Procédé de fabrication d'une préforme de fibres optiques polymères à saut d'indice, préforme obtenue et application.**

(57) La présente invention concerne un procédé de fabrication d'une préforme de fibres optiques polymères à saut d'indice comportant un coeur et une gaine, caractérisé en ce que:

a) on polymérise un mélange polymérisable du polymère de coeur pour former un barreau cylindrique;

b) on place ce barreau cylindrique dans un cavité cylindrique de façon que les axes coïncident;

c) on remplit l'espace existant entre les parois internes de la cavité et le barreau d'un mélange à polymériser du polymère de gaine;

d) on polymérise le mélange in-situ et;

e) on prélève ensuite la préforme à saut d'indice ainsi obtenue.

FIG.1

# PROCEDE DE FABRICATION D'UNE PREFORME DE FIBRES OPTIQUES POLYMERES A SAUT D'INDICE, PREFORME OBTENUE ET APPLICATION.

La présente invention concerne un procédé de fabrication d'une préforme de fibres optiques polymères à saut d'indice,ainsi que la préforme ainsi obtenue et son application à la réalisation de fibres optiques polymères.

Les fibres optiques polymères (FOP) à saut d'indice présentent une structure concentrique coeur-gaine, le coeur étant constitué d'un polymère transparent pour la longueur d'onde mise en oeuvre qui est en général un polymère polystyrénique ou polyméthacrylique, la gaine qui entoure le coeur étant constituée d'un polymère ayant un indice plus faible que celui du coeur et réalisée en général à partir des mêmes types de polymères.

Comme les fibres optiques minérales, ces fibres optiques polymères sont capables de transmettre la lumière. Elle présentent de nombreux avantages par rapport aux fibres minérales notamment une meilleure résistance mécanique à la flexion, un poids plus faible, la possibilité d'augmenter les ouvertures numériques et enfin un prix de revient assez bas. Elle présentent toutefois l'inconvénient majeur,par rapport aux fibres optiques minérales, de présenter un fort coefficient d'atténuation qui est en général de l'ordre de 100 dB/km ou plus, ce qui est plusieurs dizaines de fois supérieur au coefficient d'atténuation des fibres optiques minérales. C'est ce dernier inconvénient qui a,jusqu'à maintenant, freiné le développement des FOP. Cet inconvénient est au moins en partie lié aux procédés mis en oeuvre pour l'élaboration des FOP.

Il existe actuellement deux grands types de techniques pour préparer des fibres optiques polymères.

Tout d'abord, une technique mise au point par la Société E.I. DU PONT DE NEMOURS décrite, par exemple, dans les Brevets Français 2 405 806 et 2 405 807 qui consiste à préparer un barreau solide de coeur, lequel est extrudé par une extrudeuse à piston pour former le coeur de la fibre optique, le polymère de gaine préparé séparément est appliqué sur la fibre de coeur après son extrusion, par revêtement en solution ou par coextrusion.

Les Brevets mentionnés précédemment rapportent, pour les fibres obtenues, des coefficients d'atténuation de l'ordre de 150 à 200 dB/km, mais industriellement on observe des coefficients d'atténuation beaucoup plus importants de l'ordre de 300 dB/km.

Un second type de procédé pour préparer les fibres optiques polymères consiste à filer le coeur directement par filetage à l'état fondu, la gaine étant déposée sur le coeur filé comme cela est décrit dans le Brevet Français 2 493 997.

Les ordres de grandeur des coefficients d'atténuation pour les fibres obtenues par ce procédé demeurent sensiblement voisins de ceux observés précédemment, bien qu'ils semblent quelque peu améliorés.

Ces différentes techniques, qui comportent toutes un revêtement du coeur par la gaine après formation du coeur, conduisent à des pertes optiques importantes. En effet, la surface du coeur étant exposée à l'atmosphère extérieure avant d'être revêtue, l'interface coeur-gaine est nécessairement polluée, en particulier par la présence de poussières ou de micro bulles. En outre, la technique du dépôt introduit nécessairement des irrégularités au niveau de l'interface. A titre d'exemple, la Société NTT estime à 50 % environ les pertes optiques sur certaines de leurs FOP dûes aux imperfections introduites au fibrage, notamment à l'interface coeur-gaine. Ces irrégularités à l'interface coeur-gaine se traduisent donc par un coefficient d'atténuation élevé et des difficultés certaines pour utiliser ce type de fibres optiques.

La présente invention repose sur une nouvelle approche de la réalisation des FOP, dans laquelle on peut améliorer la qualité de l'interface coeur-gaine et donc améliorer le coefficient d'atténuation des FOP.

Afin d'améliorer les performances des fibres optiques polymères, la présente invention propose un nouveau procédé de fabrication mettant en oeuvre une préforme coeur-gaine.

Il s'agit d'un procédé de fabrication d'une préforme de fibres optiques polymères à saut d'indice comportant un coeur et une gaine, qui est fabriquée dans des conditions de propreté aussi bonnes que s'il s'agissait d'un barreau de coeur seul, caractérisé en ce que :

a) on polymérise un mélange polymérisable du polymère de coeur pour former un barreau cylindrique ;

b) on place ce barreau cylindrique dans un cavité cylindrique de façon que les grands axes du barreau et de la cavité coïncident sensiblement ;

c) on remplit l'espace existant entre les parois internes de la cavité et le barreau d'un mélange à polymériser du polymère de gaine ;

d) on polymérise le mélange en place ;

e) on prélève ensuite la préforme à saut d'indice ainsi obtenue.

Afin d'améliorer l'interface entre le coeur et la gaine, on prévoit de préférence entre l'étape b) et l'étape c) de soumettre la surface du barreau uni-indice formé à l'action d'un liquide de nettoyage avant le remplissage. De préférence, ce liquide de nettoyage sera constitué par une partie du mélange à polymériser qui sera mis en oeuvre dans le polymère de gaine, on peut bien entendu prévoir un liquide de nettoyage annexe quelconque sous réserve qu'il n'attaque pas le coeur de préforme. L'opération de lavage peut être répétée plusieurs fois.

Ce liquide de nettoyage quelqu'il soit est éliminé avant de réaliser l'étape c), ceci en particulier lorsqu'il

s'agit d'un liquide de nettoyage annexe.

Les étapes de remplissage et de nettoyage sont particulièrement facilitées, en disposant la cavité cylindrique verticalement et en prévoyant à sa partie inférieure des moyens de récupération du liquide de nettoyage, qui, après avoir ruisselé sur le barreau uni-indice, sera éliminé grâce à ces moyens de récupération.

L'un des intérêts du procédé selon l'invention est qu'il peut être mis en oeuvre sur une rampe à vide de structure et taille ordinaires moyennant quelques aménagements simples qui seront décrits plus complètement dans les exemples. Ceci permet d'effectuer l'ensemble des opérations sous vide ou sous atmosphère contrôlée, et de transférer les différents liquides mis en oeuvre sans manipulation directe, par exemple par distillation cryogénique.

Grâce à l'utilisation d'une rampe à vide, on peut également envisager de purifier in situ les produits mis en oeuvre par distillation et dégazage.

Une telle rampe à vide sera de préférence réalisée en verre, les différentes cavités cylindriques étant constituées par des tubes en verre de diamètres choisis en fonction des caractéristiques dimensionnelles de la préforme synthétisée.

Dans ce cas bien entendu, et comme cela est connu dans ce type de technique, les liquides de nettoyage pourront être éliminés en scellant la partie inférieure du tube réactionnel où ils se seront accumulés.

Il doit être clair que les polymères mis en oeuvre dans le procédé selon l'invention, ainsi que les conditions particulières de polymérisation, ne constituent pas des éléments essentiels de la présente invention.

C'est pourquoi la terminologie mélange polymérisable englobe de façon générale une composition comportant un ou plusieurs monomères ou prépolymères ainsi que les différents composants permettant de les polymériser et de leur conférer les caractéristiques requises et que le terme polymère englobe aussi bien les homopolymères que les copolymères quelle que soit leur structure.

Ainsi, il est possible d'utiliser l'un quelconque des monomères ou mélanges de monomères utilisés pour la réalisation des fibres optiques polymères, décrit dans la technique antérieure, la seule condition existant lorsque l'on choisit ces polymères est que ceux-ci soient bien entendu transparents à la longueur d'onde utilisée et qu'ils permettent d'obtenir une différence d'indice entre la partie interne (coeur) et la partie externe (gaine) tel que l'indice de la gaine soit inférieur à l'indice du coeur.

Il faut, en outre, que les monomères et le système catalytique utilisés pour réaliser la gaine ne soient pas des solvants du polymère de coeur, ceci bien entendu pour que la surface de la préforme de coeur ne soit pas attaquée lors de la mise en oeuvre et de la réalisation de la gaine.

Parmi les polymères utilisables, il faut citer les polymères choisis dans la famille des polystyrènes, des dérivés polyacryliques, polyméthacryliques, polyvinyliques, polycarbonates et les dérivés halogénés, perhalogénés ou deuterés de ces polymères, ainsi que les co-polymères de ces composés, plus particulièrement, les polymères du méthacrylate de méthyle, du tertiobutyl méthacrylate, de l'isopropyl méthacrylate, du phényl méthacrylate, de l'$\alpha$ fluoro et $\alpha$ chloro acrylate de méthyle. Il est également possible d'utiliser dans certains cas des mélanges.

On peut également, comme cela est décrit dans le Brevet Français 2 405 807, utiliser pour le coeur un polymère deutéré par exemple un polymère d'acrylate deutéré et pour la gaine un co-polymère halogéné en particulier un co-polymère fluoré tel que ceux décrits dans ce brevet français.

Les différentes étapes de polymérisation sont, en général, conduites en présence d'un catalyseur de polymérisation, celui-ci étant connus dans l'état de la technique, d'autres additifs de polymérisation peuvent également être utilisés comme, par exemple, des agents de transferts de chaînes.

Suivant les polymères mis en oeuvre, on utilisera, par exemple, une polymérisation thermique ou une polymérisation par irradiation UV.

Là encore, il s'agit de paramètres réactionnels qui sont connus de l'homme de métier, et qui ne constituent pas une caractéristique particulière de la présente invention.

Les différents composants mis en oeuvre dans le procédé de la présente invention devront être aussi purs que possible et, pour cela, ils seront de préférence distillés soigneusement avant leur utilisation.

La préforme ainsi obtenue peut alors être fibrée pour donner une fibre optique par des techniques de filage à chaud et/ou d'extrusion qui sont analogues aux techniques connúes dans ce domaine.

L'avantage de cette préforme, outre la qualité de l'interface coeur-gaine, est qu'elle est peu encombrante et peut être aisément stockée, et, qu'en outre, la pollution éventuelle de sa surface externe ne modifie pas les caractéristiques de la fibre qui sera obtenue.

D'autres caractéristiques et avantages du procédé selon la présente invention apparaîtront à la lecture de la description particulière ci-après, qui, bien entendu, ne saurait limitée en aucun cas la présente invention.

De façon générale, le procédé est conduit en deux étapes :

   a) la préparation du coeur de préforme et,

   b) la préparation de la préforme à saut d'indice comportant le coeur et la gaine.

L'exemple détaillé ci-après sera décrit en se référant aux figures sur lesquelles :

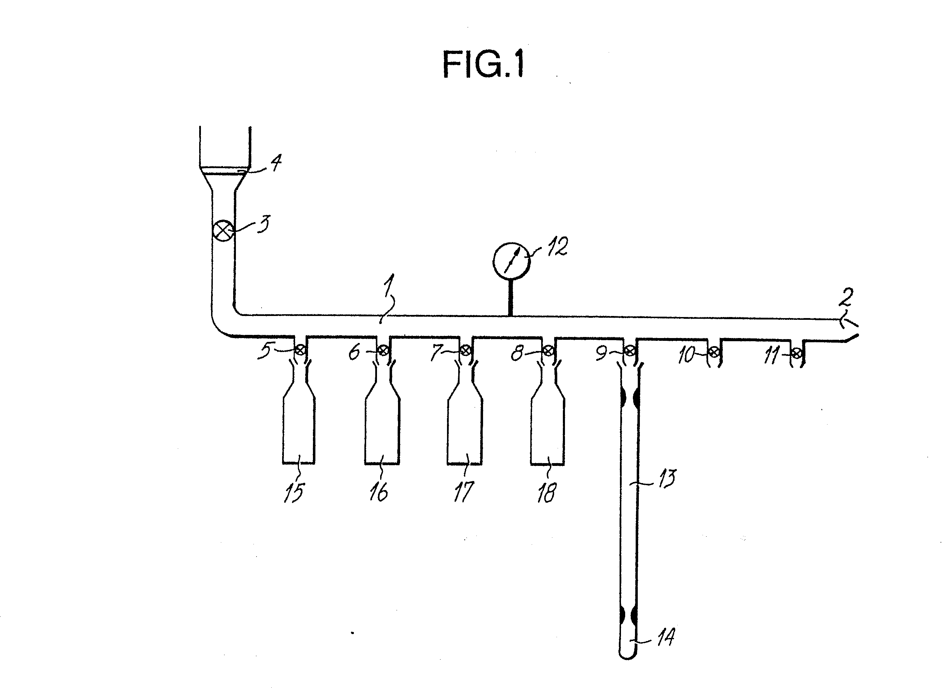

   la figure 1 : représente un schéma d'un dispositif destiné à la mise en oeuvre du procédé selon l'invention,

   la figure 2 : représente un schéma du réacteur mis en oeuvre dans la deuxième partie du procédé,

   la figure 3 : représente un schéma du réacteur précédent lors de la polymérisation de la gaine,

   la figure 4 : représente un autre mode de réalisation d'un dispositif pour la mise en oeuvre du procédé.

Le dispositif pour la mise en oeuvre du procédé comprend une rampe à vide 1 comportant une extrémité 2 destinée à être reliée à un dispositif destiné à faire le vide (non représenté) et une extrémité 3 destinée à introduire des réactifs, si nécessaires, par l'intermédiaire d'un filtre 4. Cette rampe comporte, en outre, des ajutages tels que 5 à 11 comportant chacun un robinet et destinés à recevoir les différents ballons de réactifs ou à recevoir le réacteur. Cette rampe comporte, en outre, un manomètre 12.

1. Fabrication du barreau coeur

Le tube de verre 13 de diamètre intérieur 8 mm fermé en bout et possédant une zone de soutirage 14 constitue le réacteur. Ce tube 13, préalablement lavé avec une solution sulfochromique puis rincé à l'eau distillée et séché, est fixé sur la rampe à vide par l'ajutage 9.

Les réactifs suivants sont introduits dans des ballons fixés sur la rampe, par l'intermédiaire de l'extrémité 3 à travers le filtre 4 de 0,2 mm :

ballon 15 : le monomère méthacrylate de méthyle (MMA) déstabilisé,

ballon 16 : le second monomère méthacrylate d'isopropyle (IPMA) déstabilisé,

ballon 17 : le catalyseur de polymérisation,

ballon 18 : l'agent de transfert de chaîne.

La vanne de l'extrémité 3 est alors fermée.

On fait le vide par l'extrémité 2, on ouvre la vanne 9 et on condense le MMA dans le réacteur 13. Ce MMA s'écoule le long des parois du tube en les lavant et s'accumule dans la zone de soutirage 14. On répète cette opération plusieurs fois pour bien laver le tube 13 avec le monomère On scelle ensuite le queuzot de 14 et on remplit le réacteur 13 par distillation cryogénique avec : 95 % de MMA et 5 % de IPMA en volume, puis 1 % en volume (IPMA + MMA) du catalyseur UV (Darocur 1173) et 0,1 % d'agent de transfert. On dégaze ensuite 3 à 5 fois le contenu de 13 par des cycles de refroidissement, réchauffement en plongeant 13 dans de l'azote liquide et en laissant le tube se réchauffer, en restant sous vide statique.

On scelle 13 au niveau du queuzot supérieur et on copolymérise le contenu du tube en le mettant en rotation devant une lampe UV de 200 W, irradiant à 365 mm et ce pendant 2 heures.

Une fois polymérisé, on casse le tube de verre 13 et on récupère le barreau de coeur 20.

2. Fabrication de la gaine

Le barreau 20 est mis dans un tube 21 (de ⌀ 12 mm) collé en bout 22 par un cyanoacrylate introduit préalablement au fond du tube qui assure le centrage du barreau. Ce tube 21 est muni, à sa partie inférieure, d'une ampoule de soutirage 23 reliée au tube 21 par un queuzot 24. Les ballons 15, 16, 17 ont le même contenu que précédemment, le ballon 18 contient du n-butanethiol. Le tube 21 est fixé sur la rampe à vide par l'intermédiaire de 10 comme précédemment et d'un élément intermédiaire 28 comportant deux vannes 25 et 26. Le lavage de 21 et de la surface du barreau coeur 20 s'effectue comme précédemment : condensation, écoulement le long des parois et soutirage. Le tube 21 est rempli avec les monomères et le catalyseur (90 % IPMA + 10 % MMA en volume) et 1 % Darocur/(IPMA + MMA) et 0,1 % n-butanethiol/(IPMA + MMA) par distillation cryogénique après avoir scellé la zone de soutirage 23.

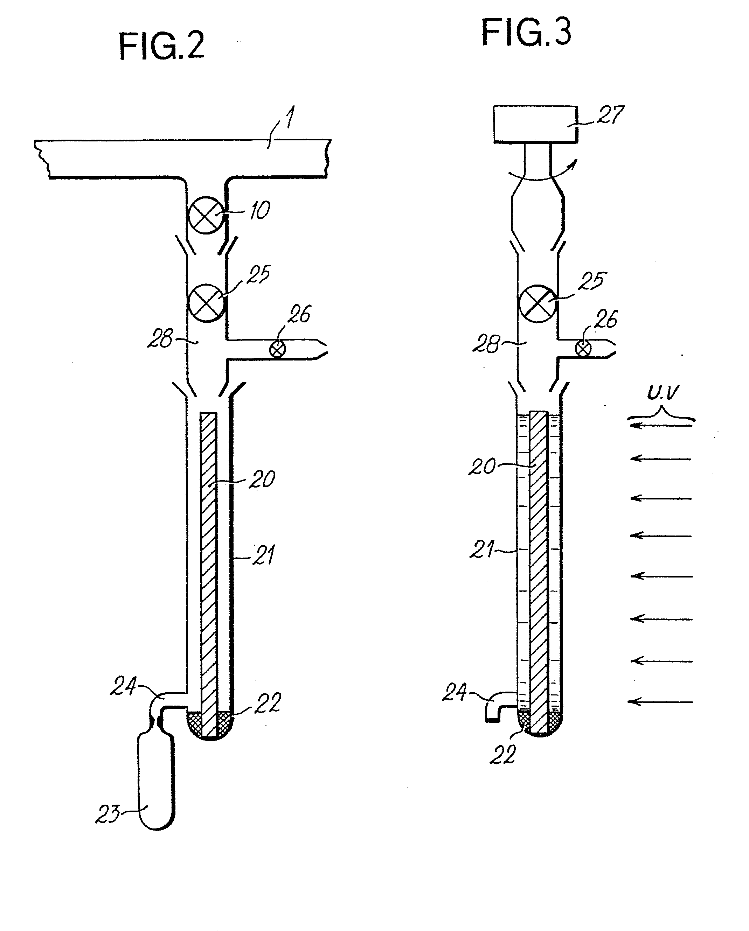

On isole alors le tube 21 grâce à la vanne 25, et l'on fixe le tube sur un moteur rotatif 27 (figure 3) en maintenant un vide statique. On place 21 devant une lampe UV en imprimant au tube une rotation grâce au moteur rotatif 27. Une fois la polymérisation terminée, on casse le tube de verre et on récupère la préforme à saut d'indice ; dans le cas du copolymère MMA/IPMA, la différence d'indice est supérieure à $10^{-2}$ : 1,475 pour la gaine externe et 1,489 pour le coeur.

Les monomères MMA et IPMA n'attaquent pas le barreau de coeur et la compatibilité et l'adhérence entre les matériaux de coeur et de gaine assurent une très bonne interface.

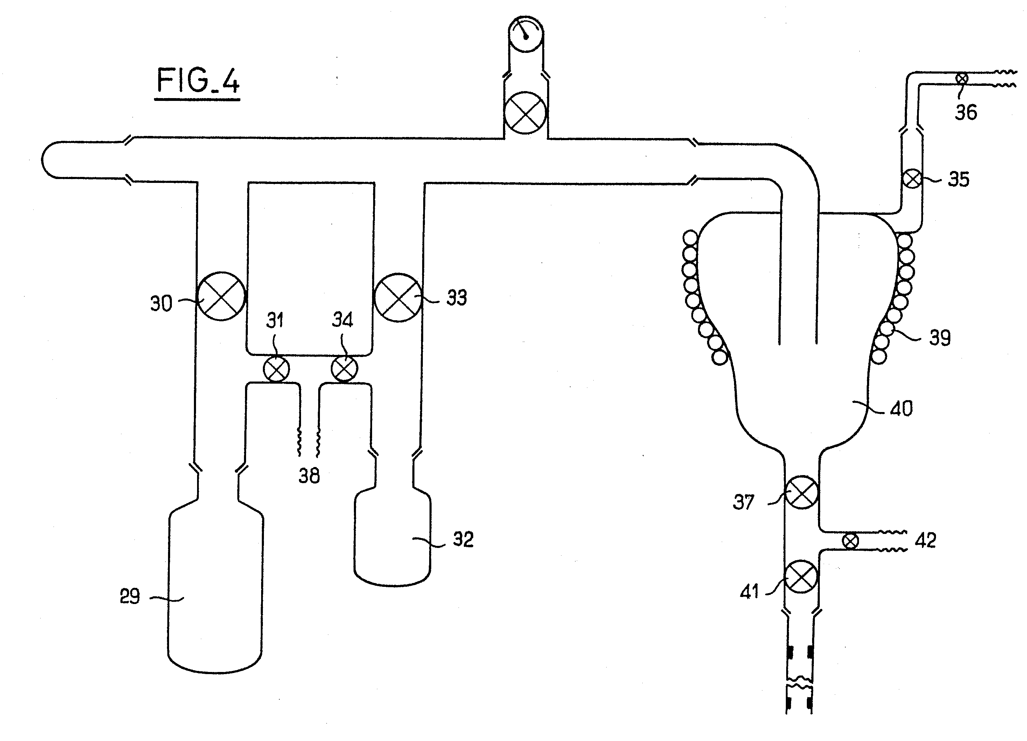

3. Autre méthode de fabrication basée sur le même principe mais nécessitant un autre appareillage (figure 4)

Un des monomères est dans le ballon 29, alors que 30, 33, 34 et 35 sont fermés, la rampe étant sous vide. On tire sous vide par 38 dans le ballon 29, pour que quand on ouvre 30, il n'y ait pas d'aspiration dans la rampe.

On chauffe au bain-marie le ballon 29 et on condense sur 40, grâce au condenseur 39 ; le liquide s'écoule le long des parois de 40. En mettant un ballon (non figuré sur le schéma) en 41 mis sous vide par 42, en ouvrant 37, on aspire le liquide contenu dans 40, on fait cela 2 ou 3 fois pour bien nettoyer 40 ; ensuite, on distille la totalité de 29. On place un tube réacteur en 41 que l'on met sous vide par 42, et, en ouvrant 37, on aspire une quantité de monomère qui va remplir la zone de soutirage en nettoyant le tube réacteur. On scelle la zone de soutirage et on remplit le réacteur en laissant couler le monomère de 40 dans le tube toujours sous vide. On distille ensuite le catalyseur ou l'agent de transfert contenu dans le ballon 32, préalablement mis sous vide par 38.

On opère de même pour la gaine optique en prenant bien soin de ne jamais ouvrir la rampe sur un récipient ayant une pression plus élevée, de façon à éviter l'introduction de poussière dans le dispositif.

Ce dispositif permet d'accroître très nettement la vitesse de purification des monomères et le nettoyage des réacteurs.

## REVENDICATIONS

---

1. Procédé de fabrication d'une préforme de fibres optiques polymères à saut d'indice comportant un coeur et une gaine caractérisé en ce que :

a) on polymérise un mélange polymérisable du polymère de coeur pour former un barreau cylindrique ;

b) on place ce barreau cylindrique dans une cavité cylindrique de façon que les axes coïncident ;

c) on remplit l'espace existant entre les parois internes de la cavité et le barreau d'un mélange à polymériser du polymère de gaine ;

d) on polymérise le mélange in-situ et ;

e) on prélève ensuite la préforme à saut d'indice ainsi obtenue.

2. Procédé selon la revendication 1 caractérisé en ce qu'entre l'étape b) et l'étape c) la surface du barreau est soumise à l'action d'un liquide de nettoyage.

3. Procédé selon la revendication 2 caractérisé en ce que le liquide de nettoyage est constitué par une partie du mélange à polymériser du polymère de gaine.

4. Procédé selon l'une des revendications 2 et 3 caractérisé en ce que la cavité cylindrique est disposée verticalement et comporte à sa partie inférieure des moyens de récupération du liquide de nettoyage.

5. Procédé selon l'une des revendications 1 à 4 caractérisé en ce que l'étape c) est conduite sous vide et que le mélange à polymériser est introduit par distillation cryogénique.

6. Procédé selon l'une des revendications 1 à 5, caractérisé en ce que les mélanges polymérisables comportent au moins un polymère choisi parmi : les polystyrènes, les dérivés polyacryliques, polyméthacryliques, polyvinyliques, polycarbonates, les dérivés halogénés, perhalogénés ou deuterés de ces produits ainsi que leurs copolymères.

7 . Procédé selon l'une des revendications 1 à 6, caractérisé en ce que les mélanges polymérisables mis en oeuvre sont des mélanges de méthacrylate de méthyle et de méthacrylate d'isopropyle.

8. Procédé selon l'une des revendications 1 à 6, caractérisé en ce que les polymères pris deux à deux font partie de la famille du méthacrylate de méthyle, du tertiobutyl méthacrylate, de l'isopropyl méthacrylate, du phényl méthacrylate, de l'$\alpha$ fluoro acrylate de méthyle, de l'$\alpha$ chloro acrylate de méthyle.

9. Préforme à saut d'indice obtenue par la mise en oeuvre du procédé selon l'une des revendications 1 à 8.

10. Application de la préforme selon la revendication 9 à la réalisation de fibres optiques par fibrage à chaud de ladite préforme.

FIG.1

# FIG.2

# FIG.3

# FIG_4

29  30  31  34  33  38  32

35  36  39  40  37  42  41

Office européen des brevets

# RAPPORT DE RECHERCHE EUROPEENNE

**0151363**
Numéro de la demande

EP 84 40 2680

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-1 497 545 (POLY-OPTICS)<br>* Page 2, alinéa 2 - page 8, alinéa 2; revendications; figures * | 1 | B 29 D 11/00<br>D 01 F 8/04<br>G 02 B 5/16 |
| A | FR-A-2 203 837 (NIPPON SELFOC)<br>* Revendications * | 1 | |
| A | FR-A-1 142 561 (J. LECLERE)<br>* En entier * | 1 | |

DOMAINES TECHNIQUES RECHERCHES (Int. Cl.4)

B 29 D
B 29 C
B 29 B
G 02 B

Le présent rapport de recherche a été établi pour toutes les revendications

| Lieu de la recherche | Date d'achèvement de la recherche | Examinateur |
|---|---|---|
| LA HAYE | 01-04-1985 | VANHECKE H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503. 03.82